# EUROPEAN PATENT APPLICATION

(11) **EP 3 737 056 A1**
(43) Date of publication of application: **11.11.2020**
(21) Application number: 18898039.5
(22) Date of filing: 05.01.2018
(51) Int. Cl.: H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/000112
(87) International publication number: WO 2019/135286

(57) **Abstract**

In order to communicate properly even when a number of bandwidth parts are controlled to be switched, according to one aspect of the present disclosure, a user terminal has a receiving section that monitors and receives downlink control information that indicates a slot format, with a given periodicity, and a control section that, when transmitting and/or receiving processes are controlled by switching between a plurality of frequency bands that are configured partially in a frequency direction in a carrier, determines a slot format to apply to a given period in a frequency band after the switch, based on given information that is transmitted from a base station.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," etc.) are also under study for the purpose of achieving further broadbandization and increased speed beyond LTE.

Furthermore, in existing LTE systems (for example, LTE Rel. 8 to 13), downlink (DL) and/or uplink (UL) communication are carried out by using subframes of 1 ms as scheduling units. For example, when normal cyclic prefix (NCP) is used, this subframe is comprised of fourteen symbols at a subcarrier spacing of 15 kHz. This subframe is also referred to as a "transmission time interval (TTI)" and so on.

In addition, in existing LTE systems, time division duplexing (TDD) and/or frequency division duplexing (FDD) are supported. In TDD, the direction of communication (UL and/or DL) of each subframe in a radio frame is controlled, semi-statically, based on UL-DL configuration, which defines the direction of communication in each subframe.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Envisaging future radio communication systems (hereinafter also simply referred to as "NR"), research is underway to use a time unit (for example, a slot, a minislot and/or the like) that is different from the subframe of existing LTE systems (for example, LTE Rel. 8 to 13) as a scheduling unit for data channels (including a DL data channel (for example, PDSCH (Physical Downlink Shared CHannel)) and/or a UL data channel (for example, PUSCH (Physical Uplink Shared CHannel)), and also simply referred to as "data," a "shared channel," and so on). With this time unit, study is also underway to control the direction of communication (UL or DL) per symbol.

Furthermore, future radio communication systems (for example, NR) are under research so as to configure partial frequency bands in a frequency band (for example, a carrier frequency band (component carrier (CC), a system band, etc.)) configured for a user terminal (user equipment (UE)). The partial frequency bands may be also referred to as "bandwidth parts (BWPs)."

When one or more BWPs for use for DL/UL communication can be configured in a carrier, control may be exerted so that these multiple BWPs are activated (activation) and deactivated (deactivation) on a switched basis. However, how to control the slot format when BWPs are subject to switching has not been studied much yet. If the slot format cannot be determined properly when switching BWPs, communication throughput and/or communication quality may be deteriorated.

The present invention has been made in view of the above, and it is therefore an object of the present invention to provide a user terminal and a radio communication method, whereby, even when a number of bandwidth parts are controlled to be switched, it is still possible to communicate properly.

### Solution to Problem

According to one aspect of the present invention, a user terminal has a receiving section that monitors and receives downlink control information that indicates a slot format, with a given periodicity, and a control section that, when transmitting and/or receiving processes are controlled by switching between a plurality of frequency bands that are configured partially in a frequency direction in a carrier, determines a slot format to apply to a given period in a frequency band after the switch, based on given information that is transmitted from a base station.

### Advantageous Effects of Invention

According to the present invention, even when a number of bandwidth parts are controlled to be switched, it is still possible to communicate properly.

### Brief Description of Drawings

FIG. 1 is a diagram to show an example of a DCI format for reporting a slot format;
FIGs. 2A to 2D are diagrams to show examples of scenarios in which BWPs are used;
FIGs. 3A and 3B are diagrams to show examples of mechanisms for switching between BWPs;
FIG. 4 is a diagram to illustrate a problem when BWP switching takes place in the middle of the SFI monitoring periodicity;
FIG. 5 is a diagram to show an example of a method of determining a slot format when switching a BWP in the middle of the SFI monitoring periodicity;
FIG. 6 is a diagram to show another example of a method of determining a slot format when switching a BWP in the middle of the SFI monitoring periodicity;
FIG. 7 is a diagram to show another example of a method of determining a slot format when switching a BWP in the middle of the SFI monitoring periodicity;
FIGs. 8A to 8C are diagrams to show examples in which control resource sets for SFI are configured per CC;
FIGs. 9A to 9C are diagrams to show examples in which control resource sets for SFI are configured per BWP;
FIG. 10 is a diagram to show an example of monitoring control for a control resource set for SFI after a BWP is switched;
FIG. 11 is a diagram to show another example of monitoring control for a control resource set for SFI after a BWP is switched;
FIG. 12 is a diagram to show an exemplary schematic structure of a radio communication system according to the present embodiment;
FIG. 13 is a diagram to show an exemplary overall structure of a radio base station according to the present embodiment;
FIG. 14 is a diagram to show an exemplary functional structure of a radio base station according to the present embodiment;
FIG. 15 is a diagram to show an exemplary overall structure of a user terminal according to the present embodiment;
FIG. 16 is a diagram to show an exemplary functional structure of a user terminal according to the present embodiment; and
FIG. 17 is a diagram to show an exemplary hardware structure of a radio base station and a user terminal according to the present embodiment.

### Description of Embodiments

In NR, an agreement has been reached on using a given time unit (for example, a slot) as a scheduling unit for data channels (including a DL data channel (for example, PDSCH) and/or a UL data channel (for example, PUSCH), and also simply referred to as "data," a "shared channel," and so on).

A slot is a time unit that depends upon what numerology (for example, the subcarrier spacing and/or the duration of symbols) a user terminal employs. The number of symbols per slot may be determined by subcarrier spacing. For example, if the subcarrier spacing is 15 kHz or 30 kHz, the number of symbols per slot may be seven or fourteen. When the subcarrier spacing is 60 kHz or greater, the number of symbols per slot may be fourteen. Note that the number of symbols per slot is not limited to these examples.

Also, NR is anticipated to control the direction of communication (at least one of "UL," "DL" and "flexible"), dynamically, per symbol included in a slot. "Flexible" means that resources are neither DL nor UL, and may be referred to as "unknown" or "X." For example, studies are underway to report information about the format of one or more slots (also referred to as "slot format-related information (SFI)") to UE with a given periodicity.

This SFI may be included in the downlink control information (DCI) for reporting a slot format, which is transmitted using a downlink control channel (for example, a group-common PDCCH). The slot format-reporting DCI may be defined apart from the DCI that is used to schedule data, and may be referred to as "DCI format 2_0," "DCI format 2A," "DCI format 2," "SFI-PDCCH," "SFI-DCI," etc.

The UE may monitor the slot format-reporting DCI in slots per with a given periodicity. The periodicity for monitoring the slot format-reporting DCI may be reported in advance from a base station to the UE through higher layer signaling or the like.

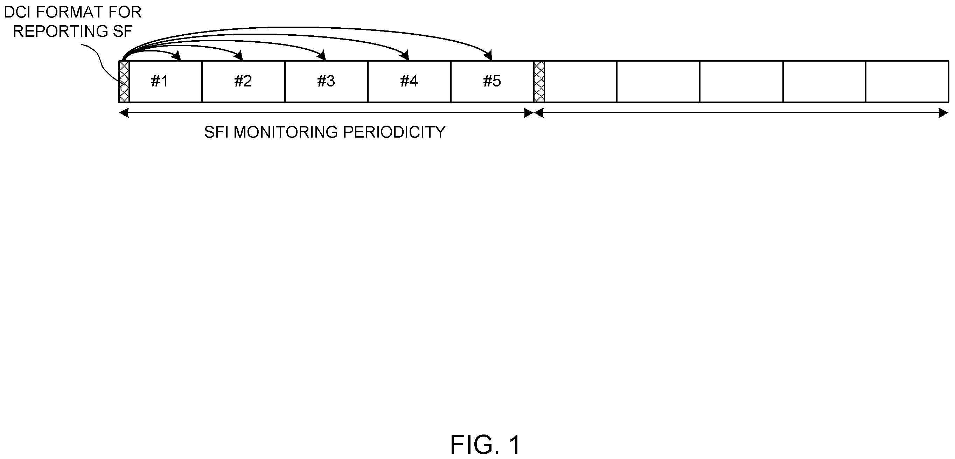

When the UE detects the slot format-reporting DCI in a given slot (mT_{SFI}), the UE determines the slot format for each slot {mT_{SFI}, mT_{SFI}+1, ... , (m+1)T_{SFI}-1}, in the serving cell, based at least on this DCI (see FIG. 1). The T_{SFI} is equivalent to a parameter related to the monitoring periodicity of SFI (SFI monitoring periodicity), and may be configured in the UE through higher layer signaling. Furthermore, m corresponds to the monitoring time index (for example, the number of a slot where the DCI for reporting the slot format is monitored in the radio frame) of the slot format-reporting DCI.

The UE controls the receiving processes (for example, the monitoring periodicity, and the like) for the slot format-reporting DCI based on the periodicity configured by the base station. FIG. 1 shows a case in which the SFI monitoring periodicity is five slots (for example, 5 ms). In this case, the UE determines the slot format of each slot (here, slots #1 to #5) based on the slot format-reporting DCI detected in the slot (for example, slot #1) to meet the monitoring periodicity.

The UE monitors the slot format-reporting DCI according to parameters that are reported using higher layers. These parameters might include the RNTI (for example, an SFI-RNTI) whereby the CRC of this DCI is masked, the payload of this DCI (that is, the number of information bits excluding the CRC, or the number of information bits including the CRC), the PDCCH aggregation level at which blind detection is performed, the number of blind detection candidates at the PDCCH aggregation level, the cell where the slot format-reporting DCI for the cell and/or the carrier is monitored (for example, cell-to-SFI), and so forth. The UE may monitor the slot format-reporting DCI according to these parameters, and, upon detecting it, determine the format for each slot based on the value indicated by a specific field included in the slot-format reporting DCI.

Also, envisaging NR, research is underway to allocate a carrier (also referred to as "component carriers (CCs)," "cells," "system bands," etc.) having a wider bandwidth (for example, 100 to 800 MHz) than in existing LTE systems (for example, LTE Rel. 8 to 13).

In this case, user terminals that are capable of transmission and/or receipt in the entirety of the above carrier (and that are also referred to as "wideband (WB) UEs," "single-carrier WB UEs," etc.) and user terminals that are not capable of transmission and/or receipt in the entire carrier (and that are also referred to as "BW-reduced UEs," etc.) might co-exist.

As described above, in NR, a number of user terminals to support different bandwidths are likely to co-exist, and it naturally follows that an agreement has been reached on semi-statically configuring one or more partial frequency bands within a carrier. Each frequency band (for example, 50 MHz, 200 MHz and others) in this carrier is referred to as a "partial band," a "bandwidth part (BWP)," and so on.

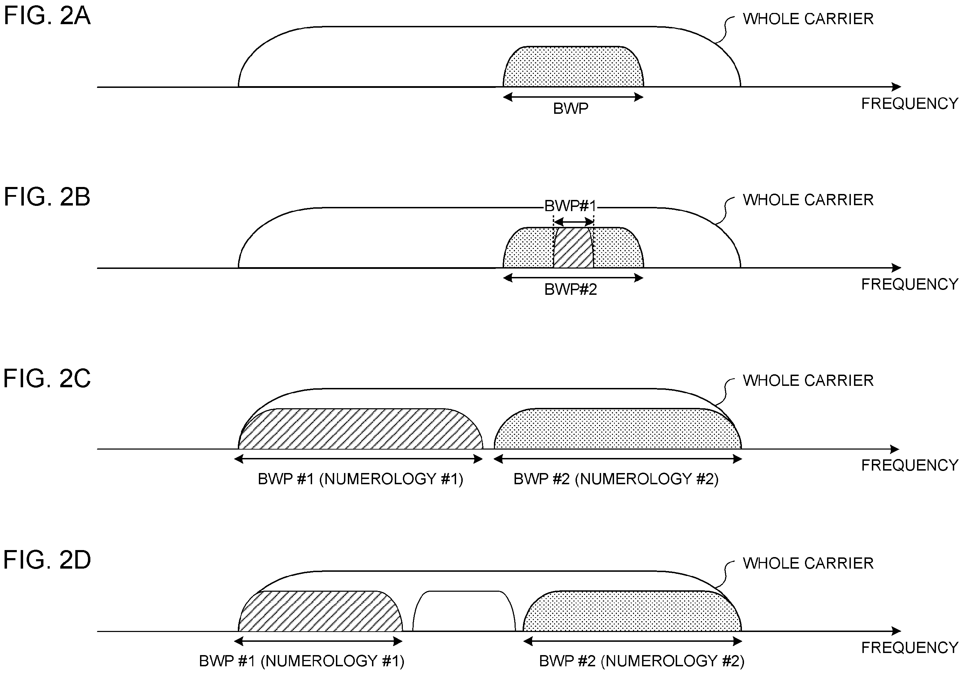

In addition, envisaging introduction of BWPs, various scenarios for configuring BWPs are under study (see FIGs. 2). FIG. 2A shows a scenario in which a user terminal is configured with one BWP in one carrier (scenario 1). The activation or deactivation of this BWP may be controlled.

Here, activating a BWP means providing a state in which this BWP can be used (or making a transition to a state in which this BWP can be used), and may be also seen as, for example, activation or enablement of the BWP's configuration information (BWP configuration information). Also, deactivating a BWP means providing a state in which this BWP cannot be used (or making a transition to a state where the BWP cannot be used), and may be also seen as, for example, deactivation or disablement of the BWP's configuration information.

FIG. 2B shows a scenario in which a user terminal is configured with a number of BWPs in one carrier (scenario 2). As shown in FIG. 2B, these BWPs (for example, BWPs #1 and #2) may at least partially overlap. For example, in FIG. 2B, BWP #1 is a part of the frequency band of BWP #2.

Also, the activation or deactivation of at least one of these BWPs may be controlled. Also, the number of BWPs to be activated at a given time may be limited (for example, only one BWP may be active at a given time). For example, in FIG. 2B, only one of BWPs #1 and #2 is active at a given time.

For example, referring to FIG. 2B, BWP #1 may be activated when no data is transmitted and/or received, and BWP #2 may be activated when data is transmitted and/or received. To be more specific, when data to be transmitted and/or received is produced, BWP #1 may be switched to BWP #2, and, when the transmission and/or the receipt of the data is finished, BWP #2 may be switched to BWP #1. In this way, the user terminal does not need to keep monitoring BWP #2, which has a wider bandwidth than BWP #1, so that power consumption can be reduced.

FIG. 2C shows a scenario in which multiple BWPs is configured in different bands within one carrier (scenario 3). As shown in FIG. 2C, different numerologies may be applied to these BWPs. Here, a numerology may refer to at least one of the subcarrier spacing, the length of a symbol, the length of a slot (TTI (Transmission Time Interval)), the length of cyclic prefix (CP), the number of symbols per slot, and so forth.

For example, in FIG. 2C, a user terminal having capabilities for transmission and/or receipt in the whole carrier may be configured with BWPs #1 and #2 with different numerologies. In FIG. 2C, at least one BWP configured for the user terminal is activated or deactivated, and one or more BWPs may be active at a given time.

FIG. 2D shows a scenario in which multiple BWPs are configured in different bands within one carrier (scenario 3). As shown in FIG. 2D, these multiple BWPs may be configured in non-contiguous frequency fields. Here, a case is shown in which BWPs #1 and #2 are configured in non-contiguous frequency fields.

Note that, referring to FIGs. 2, the network (which is, for example, a radio base station) needs not assume that the user terminal receives and/or transmits outside the active BWP. Note that, in FIGs. 2, a user terminal to support the whole carrier is not prevented, in any way, from receiving and/or transmitting signals (for example, control signals) outside the configured BWPs (or the active BWP).

Note that a BWP that is used in DL communication may be referred to as a "DL BWP (DL frequency band)," and a BWP that is used in UL communication may be referred to as a "UL BWP (UL frequency band)." A DL BWP and a UL BWP may have frequency bands that at least partially overlap. Hereinafter, a DL BWP and a UL BWP will be collectively referred to as a "BWP," unless a distinction needs to be made.

At least one of the DL BWPs configured for a user terminal (for example, a DL BWP included in the primary CC) may include a control resource field to serve as a candidate for allocating a DL control channel (DCI). This control resource field may be referred to as a "control resource set (CORESET)," a "control subband," a "search space set," a "search space resource set," a "control field," a "control subband," an "NR-PDCCH field," and so forth.

The user terminal monitors one or more search spaces in the control resource set, and detects the DCI for the user terminal. The search space may include a common search space (CSS), in which DCI (for example, group DCI or common DCI) that applies in common to one or more user terminals is allocated, and/or a user terminal (UE)-specific search space (USS), in which a user terminal-specific DCI (for example, a DL assignment and/or a UL grant) is allocated.

The user terminal may receive configuration information for the control resource set (CORESET configuration information) by using higher layer signaling (for example, RRC (Radio Resource Control) signaling, etc.). The CORESET configuration information may indicate, at least one of, each CORESET's frequency resource (for example, the number of RBs and/or the starting RB index, etc.), time resource (for example, the starting OFDM symbol index), time duration, REG (Resource Element Group) bundle size (REG size), transmission type (for example, interleaving is applied, interleaving is not applied, etc.), periodicity (for example, the monitoring periodicity per control resource set), and so forth.

As described above, when part of a number of BWPs (for example, only one BWP) configured for the UE is activated, the UE switches the BWP to control the transmission and receipt of data and the like. As to how to control the switching of BWPs, a method of controlling and commanding BWP switching to the UE (mechanism 1), and a method of controlling BWP switching based on a timer's expiration (mechanism 2) may be possible.

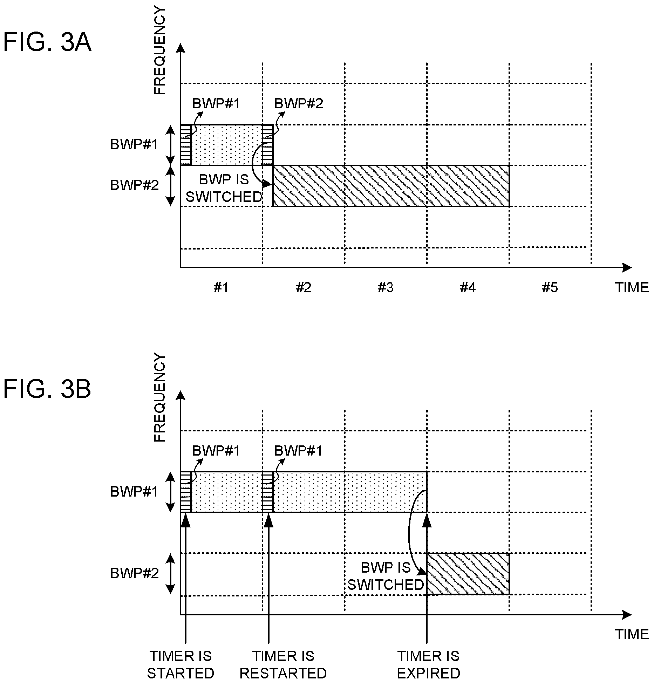

FIG. 3A shows an example of BWP switching control to use mechanism 1. In mechanism 1, for example, a base station reports, to UE, information that indicates the BWP to be activated (bandwidth part indicator) by including this information in downlink control information. UE switches the BWP to be activated, based on this downlink control information. Note that the base station may report the DL BWP and the UL BWP to activate, to the UE, by using different DCI formats.

In FIG. 3A, the UE activates BWP #1 based on the BWP-indicating information (which, in this case, indicates BWP #1) included in the DCI in the first time period (for example, slot #1). Also, the UE activates BWP #2 based on the BWP-indicating information (which, in this case, indicates BWP #2) included in the DCI in a second time period (for example, slot #2).

FIG. 3B shows an example of BWP switching control to use mechanism 2. In mechanism 2, for example, the base station configures the UE with a timer (for example, a BWP-Inactivity Timer) by using higher layer signaling or the like. If the UE receives no information to indicate the BWP to activate (for example, DCI to include BWP-indicating information) for a given period of time and the timer that is configured expires, the UE controls the switching of the BWP so as to activate a given BWP. The given BWP may be referred to as a "default BWP." The default BWP may be determined based on a given rule, or may be reported in advance from the base station to the UE.

In FIG. 3B, the UE activates BWP #1 based on the BWP-indicating information (which, in this case, indicates BWP #1) included in the DCI in the first time period (for example, slot #1). Note that the timer is also started from slot #1. The UE activates BWP #2 based on the BWP-indicating information (which, in this case, indicates BWP #2) included in the DCI in a second time period (for example, slot #2). In this case, the UE receives DCI to include BWP-indicating information within the timer's duration, and therefore the timer is also re-started. Also, in slot #4, based on the expiration of the timer, the BWP to activate is switched from BWP #1 to a given BWP (here, BWP #2).

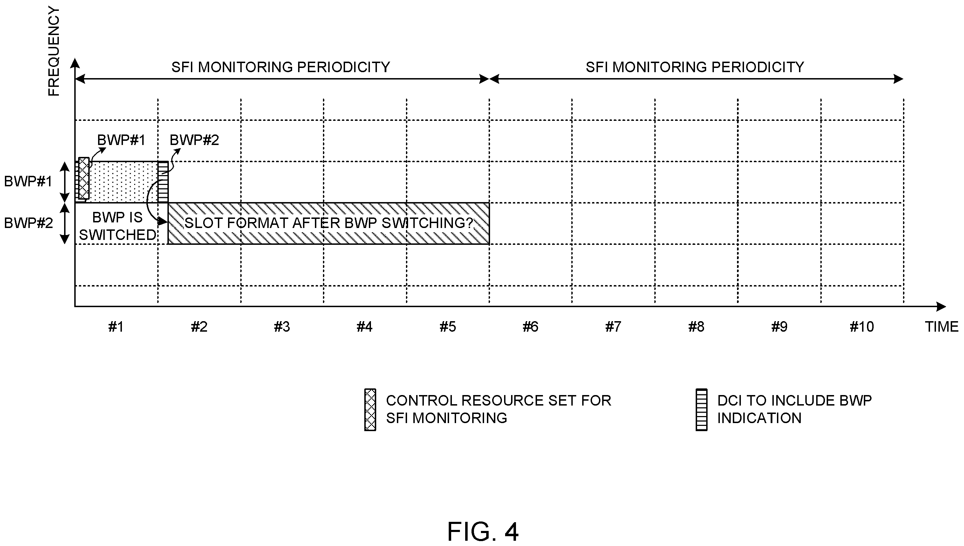

In this way, NR presumes that communication is carried out by switching the BWP that is configured. Meanwhile, when switching a BWP, the problem lies in how the UE determines the slot format after the BWP is switched (the slot format in the BWP after the switch) (see FIG. 4).

For example, assume that the UE monitors the slot format-reporting DCI (SFI monitoring) and controls the switching of BWPs. Like this case, the problem when a BWP is switched in the middle of (or during) the SFI monitoring periodicity lies in how to determine the slot format for a given period (for example, slots #2 to #5 in FIG. 4) in the BWP after the switch.

The present inventors have focused on the fact that, when SFI is monitored with a given periodicity, a BWP may be switched in the middle of this given periodicity, and worked on a method of determining the slot format after the BWP is switched (also referred to as "BWP switching"), and arrived at the present invention.

Also, how to control SFI monitoring (for example, the control resource set for monitoring SFI) in slots (for example, slot #6 in FIG. 4) to meet the SFI monitoring periodicity after BWP switching is also a problem. Therefore, the present inventors have worked on the method of monitoring in the SFI monitoring periodicity after BWP switching, and arrived at the present invention.

Now, embodiments of the present invention will be described below in detail with reference to the accompanying drawings. Each of the following embodiments may be applied alone or may be applied in combinations.

Also, in the following description, cases in which two BWPs are configured in the same carrier will be described by way of example, but the number of BWPs that can be configured is not limited to two, as long as multiple BWPs are configured. Also, as for the switching of BWPs, cases to use downlink control information (as with mechanism 1) will be described as examples, but cases to use a timer (as with mechanism 2) may be applied as well.

Furthermore, in the following description, a single BWP will be activated for a given user terminal at a given time, but this is by no means limiting, and the following description can be applied to the case in which one or more BWPs are activated at a given time. In addition, the following description can be applied to both DL BWPs and UL BWPs.

### (First Example)

According to the first example of the present invention, the slot format in a given period after a BWP is switched is determined based on given information reported from a base station. Note that the given period after a BWP is switched includes, at least, the period following the switching of the BWP, up to the slot that serves as the next SFI monitoring periodicity (or the period following the switching of the BWP, up until the next SFI is received).

The given information may be at least one of SFI that is included in slot format-reporting DCI received before the BWP is switched, UE-specific DCI, and UL-DL configuration information that is reported in higher layer signaling.

### <Use of SFI before BWP Switching>

When switching the BWP to be activated, UE determines the slot format in a given period following the switching of the BWP based on SFI (latest SFI) received before the switching of the BWP.

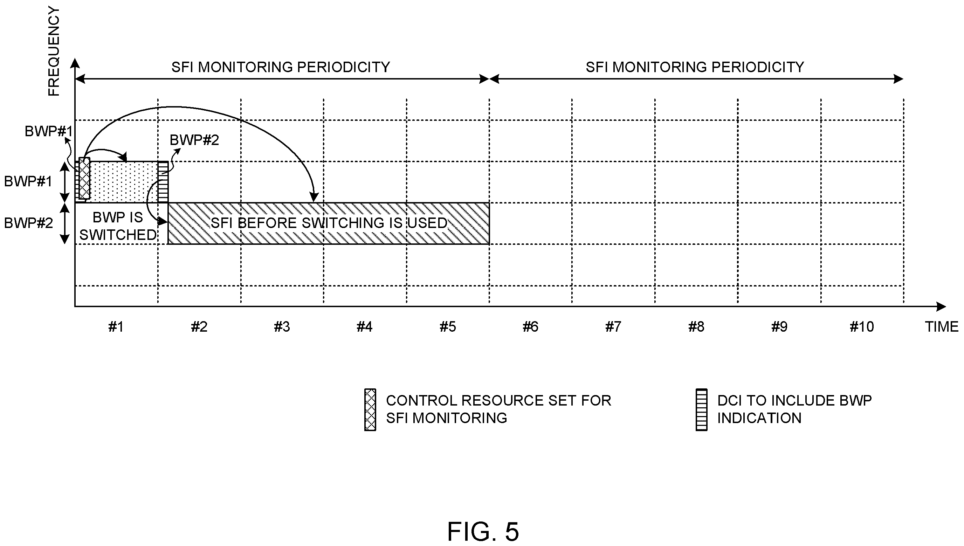

FIG. 5 shows an example in which a BWP is switched in the middle of the SFI monitoring periodicity. A case is illustrated here, in which the SFI monitoring periodicity is five slots (for example, 5 ms), and in which the UE monitors the control resource set, in which slot format-reporting DCI is transmitted in slots #1 and #6. In this case, DCI to indicate the slot format for slots #1 to #5 is transmitted in slot #1.

Also, FIG. 5 shows a case in which DCI to include BWP-indicating information to command activation of BWP #1 is transmitted in slot #1, and DCI to include BWP-indicating information to command activation of BWP #2 is transmitted in slot #2. In this case, the UE switches the BWP to activate from BWP #1 to BWP #2, based on the DCI to include BWP-indicating information, received in slot #2. Note that the processing load on the terminal may be reduced by not allocating transmission and receipt during the BWP switching period. In this case, the user terminal does not have to perform transmission and receipt in a given time duration when switching the BWP.

If the UE detects the slot format-reporting DCI in slot #1, the UE determines the slot format for each of slots #1 to #5 based at least on the SFI included in this DCI. That is, the UE determines the slot format for a given period (for example, slots #2 to #5) in BWP #2 after the BWP is switched, based on the SFI received in slot #1 prior to the switching of the BWP.

For example, the UE monitors the slot format-reporting DCI according to parameters that are reported using higher layers. The parameters might include the RNTI (for example, an SFI-RNTI) whereby the CRC of this DCI is masked, the payload of this DCI (that is, the number of information bits excluding the CRC, or the number of information bits including the CRC), the PDCCH aggregation level at which blind detection is performed, the number of blind detection candidates at the PDCCH aggregation level, the cell where the slot format-reporting DCI for the cell and/or the carrier is monitored (for example, cell-to-SFI), and so forth. The UE may monitor the slot format-reporting DCI according to these parameters, and, upon detecting it, determine the format for each slot based on the value indicated by a specific field included in the slot-format reporting DCI.

Furthermore, the UE may determine the slot format of the BWP after the switch (here, BWP #2), by taking into account the numerologies applied to the BWP before the switch (here, BWP #1) and the BWP after the switch.

If the numerologies applied to the BWPs before and after the switch (here, BWP #1 and BWP #2) are the same, the slot format that was reported in the SFI prior to the switch may be used as the slot format after the BWP is switched, on an as-is basis. The same numerology means that given parameters (for example, subcarrier spacing and/or the number of symbols included in a slot) are the same.

If the numerologies applied to the BWPs before and after the switch (here, BWP #1 and BWP #2) are different, the UE may determine the slot format in the BWP after the switch by taking into account the relationship between the numerologies before and after the switch. For example, the UE considers the relationship between the numerologies applied before and after BWP switching, and changes the content of the slot format reported before the switching of the BWP, and applies the changed slot format.

For example, when the subcarrier spacings (or the numbers of symbols per slot) applied to BWP #1 and BWP #2 are different, the slot format reported in the SFI is replaced based on a given rule and applied to BWP #2.

To illustrate an example, if the subcarrier spacing doubles when the BWP switches, two symbols in the BWP after the switch may be linked with one symbol in the slot format reported in the SFI. In this case, if the first two symbols in the slot format reported in the SFI are "D," the first four symbols are judged to be "D. "

In another example, when the subcarrier spacing changes becomes half when the BWP switches, one symbol in the BWP after the switch may be linked with two symbols in the slot format reported in the SFI. In this case, if the first two symbols in the slot format reported in the SFI are "D," the first one symbol is judged to be "D."

By this means, even if different numerologies are used before and after the BWP is switched, the slot format in the BWP after the switch can be determined by using the SFI that was received before the switch.

Also, the slot format after BWP switching is determined based on SFI from before the BWP switching, so that the slot format after the BWP switching can be determined without reporting new information to the UE. By this means, even UE that receives no DCI in a given period following the switching of the BWP (for example, UE for which no data is scheduled) can also determine the slot format. Furthermore, even when BWP switching is performed, the process in UE can be simplified.

Note that, if SFI is detected during SFI monitoring that is performed following BWP switching (SFI monitoring in slot #6 in FIG. 5), the UE may determine the slot format in BWP #2 based on SFI that is newly detected in subsequent slots (in slot #6 or later).

### <Use of UE-Specific DCI and/or UL-DL Configuration>

When switching the BWP to be activated, the UE determines the slot format in a given period following the switching of the BWP based on information reported in UE-specific DCI and/or information related to UL-DL configuration reported in higher layer signaling. That is, when switching the BWP, the UE does not use SFI received before the BWP was switched (ignore or discard this SFI), and determines the slot format based on information other than the SFI.

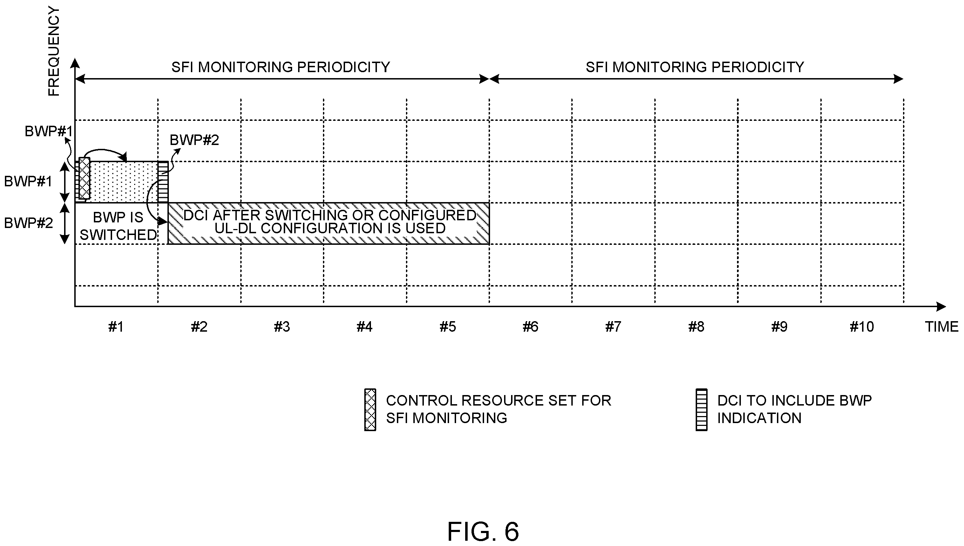

FIG. 6 shows an example in which a BWP is switched in the middle of the SFI monitoring periodicity. A case will be illustrated here, in which the SFI monitoring periodicity is five slots (for example, 5 ms), and the UE monitors the control resource set where the DCI for SFI is transmitted in slots #1 and #6. In this case, DCI to indicate the slot format for slots #1 to #5 is transmitted in slot #1.

Also, FIG. 6 shows a case in which DCI to include BWP-indicating information to command activation of BWP #1 is transmitted in slot #1, and DCI to include BWP-indicating information to command activation of BWP #2 is transmitted in slot #2. In this case, the UE switches the BWP to activate from BWP #1 to BWP #2, based on the DCI to include BWP-indicating information, received in slot #2.

If the UE detects the slot format-reporting DCI in slot #1, the slot format for slot #1 is determined based at least on the SFI included in this DCI. Meanwhile, the slot format for a given period (for example, slots #2 to #5) in BWP #2 following the switching of the BWP is determined without using this SFI (that is, the SFI is ignored or discarded), and is determined based on different information.

For example, the UE determines the slot format for slots #2 to #5 based on information included in DCI transmitted after the BWP is switched. The DCI transmitted after the BWP is switched may be UE-specific DCI that schedules data (for example, a PDSCH or a PUSCH). When transmitting DCI to the UE in a given period following the switching of the BWP, the base station may include the slot format-related information in this DCI and report this information to the UE.

Alternatively, the UE may determine the slot format for a given period following the switching of the BWP based on a parameter that shows UL-DL configuration, reported in higher layer signaling. The parameter to show UL-DL configuration reported in higher layer signaling may be information that is reported to a number of UEs in common (UL-DL-configuration-common), or may be information that is reported in a UE-specific manner

(UL-DL-configuration-dedicated). Also, if the user terminal is not configured with the parameter that shows UL-DL configuration that is reported in higher layer signaling, the user terminal may exert control on the assumption that all resources are neither DL resources nor UL resources (and are, for example, "flexible," "unknown," or "X").

If no DCI is received after the BWP is switched, the UE may use the UL-DL configuration reported in higher layer signaling, and, if DCI is received, the UE may determine the slot format based on information included in this DCI.

In this way, the slot format following BWP switching is determined using information other than SFI that is reported before the BWP switching, so that the slot format after the BWP switching can be configured in a flexible manner.

Note that, if SFI is detected during SFI monitoring that is performed following BWP switching (SFI monitoring in slot #6 in FIG. 6), the UE may determine the slot format in BWP #2 based on SFI that is newly detected in subsequent slots (in slot #6 or later).

### (Variation)

Control may be exerted so that BWP switching does not take place in the middle of the SFI monitoring periodicity. In this case, UE may switch the BWP and determine the slot format on the assumption that information to command BWP switching is not received during the SFI monitoring periodicity.

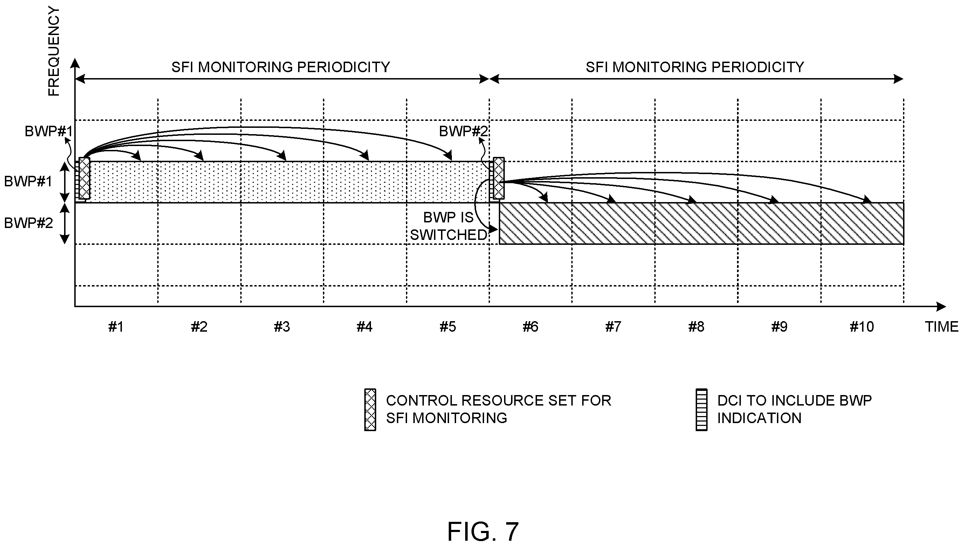

FIG. 7 shows an example of a case in which control is exerted so that the BWP is not switched in the middle of the SFI monitoring periodicity. A case will be illustrated here, in which the SFI monitoring periodicity is five slots (for example, 5 ms), and the UE monitors the control resource set where the DCI for SFI is transmitted in slots #1 and #6. In this case, DCI to indicate the slot format for slots #1 to #5 is transmitted in slot #1, and DCI to indicate the slot format for slots #6 to #10 is transmitted in slot #6.

Also, FIG. 7 shows a case in which DCI to include BWP-indicating information to command activation of BWP #1 is transmitted in slot #1, and DCI to include BWP-indicating information to command activation of BWP #2 is transmitted in slot #6. In this case, the UE switches the BWP to activate from BWP #1 to BWP #2, based on the DCI to include BWP-indicating information, received in slot #6.

If the UE detects the slot format-reporting DCI in slot #1, the UE determines the slot format for each of slots #1 to #5 based at least on the SFI included in this DCI. Likewise, if the UE detects the slot format-reporting DCI in slot #6, the UE determines the slot format for each of slots #6 to #10 based at least on the SFI included in this DCI.

In addition, the UE may switch the BWP and determine the slot format on the assumption that the UE does not receive information to command BWP switching during the SFI monitoring periodicity (here, slots #2 to #5 and slots #7 to #10). In this case, the periodicity for monitoring SFI and the periodicity for transmitting BWP-indicating information may be the same, or the periodicity for transmitting BWP-indicating information may be configured to be an integral multiple of the SFI monitoring periodicity.

If BWP switching is controlled based on a timer's expiration, the UE may assume that the timer does not expire in the middle of the SFI monitoring periodicity. Alternatively, the UE may exert control so that the BWP is not switched even if the timer expires in the middle of the SFI monitoring periodicity.

In this way, control is exerted so that the BWP is not switched in the middle of the SFI monitoring periodicity (or the BWP is switched at the timing of SFI monitoring), and therefore the slot format in each BWP can be configured properly based on SFI.

### (Second Example)

With a second example of the present invention, how SFI monitoring is controlled after BWP switching will be described. To be more specific, in a slot to meet the SFI monitoring periodicity after the BWP is switched, the control resource set for SFI which the UE monitors is configured in a given BWP.

The given BWP is a specific BWP that is configured in advance (SFI monitoring control 1), or a BWP that is activated (SFI monitoring control 2).

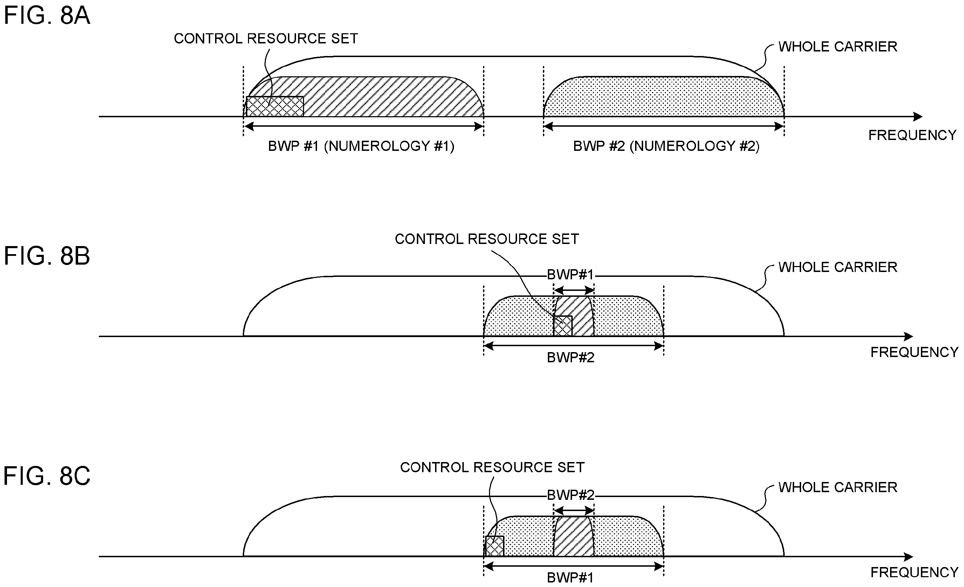

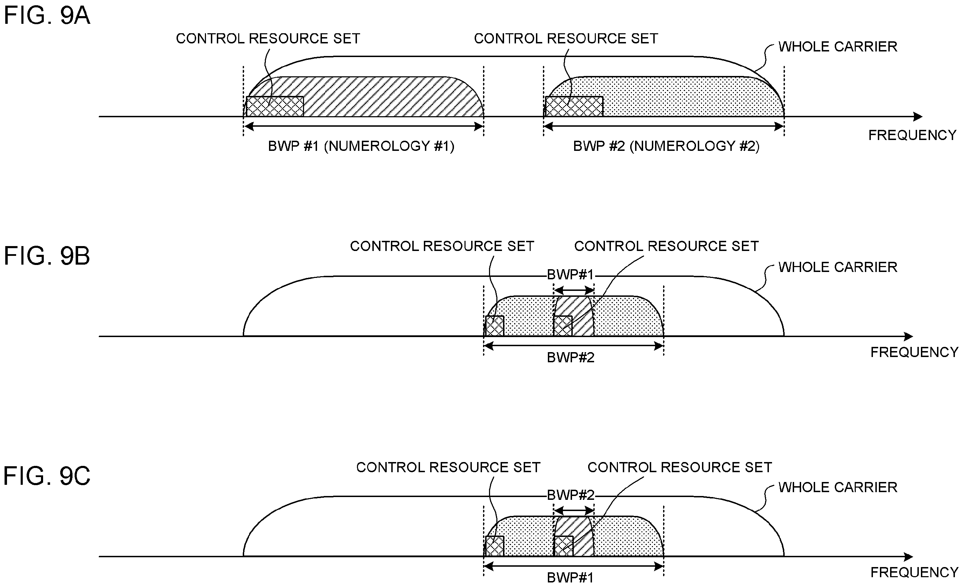

Before describing SFI monitoring control 1 and SFI monitoring control 2, the scenario for configuring control resource sets for SFI will be described below with reference to FIGs. 8 and FIGs. 9.

The slot format-reporting DCI is transmitted from a base station to UE by using a downlink control channel (PDCCH) that is allocated to control resource sets. The slot format-reporting DCI may be defined as a DCI format different from the UE-specific DCI for scheduling data. Furthermore, the slot format-reporting DCI may be transmitted in a PDCCH (group-common PDCCH) that is common between UEs.

A control resource set here refers to a field for allocating the PDCCH for transmitting the slot format-reporting DCI (or the resource field the UE monitors), and is configured for the UE in advance. A configuration may be employed here in which the control resource sets are provided per CC (or carrier), or a configuration may be employed in which the control resource sets are provided per BWP.

When the control resource sets are provided per CC (control resource set configuration 1), one control resource set is provided in a given BWP among a number of BWPs configured in a carrier (see FIGs. 8). When a number of BWPs (here, BWP #1 and BWP #2) are configured in different frequency fields separately, a control resource set is provided in a given BWP (here, BWP #1) (see FIG. 8A).

When a number of BWPs (here, BWP #1 and BWP #2) are configured to overlap each other in part of the frequency fields, a control resource set is provided in a given BWP (see FIGs. 8B and 8C). In FIG. 8B, the whole of the bandwidth part of BWP #1 is included in the bandwidth part of BWP #2, and a control resource set is provided within the range of the bandwidth part of BWP #1. In FIG. 8C, the whole of the bandwidth part of BWP #2 is included in the bandwidth part of BWP #1, and a control resource set is provided in the bandwidth part of BWP #1, excluding the bandwidth part of BWP #2.

When control resource sets are provided per BWP (control resource set configuration 2), control resource sets can be provided in a number of BWPs configured in a carrier (see FIGs. 9). If a number of BWPs (here, BWP #1 and BWP #2) are configured in different frequency fields separately, control resource sets are provided in each BWP (here, BWP #1 and BWP #2) (see FIG. 9A).

When a number of BWPs (here, BWP #1 and BWP #2) are configured to overlap each other in part of the frequency fields, control resource sets are provided in each BWP (see FIGs. 9B and 9C). In FIG. 9B, the whole of the bandwidth part of BWP #1 is included in the bandwidth part of BWP #2, and control resource sets can be provided in the range of the bandwidth part (overlapping part) of BWP #1 and in the field of BWP #2 not overlapping with BWP #1. In FIG. 9C, the whole of the bandwidth part of BWP #2 is included in the bandwidth part of BWP #1, and control resource sets can be configured in the range of the bandwidth part of BWP #2 (overlapping part) and in the field of BWP #1 not overlapping with BWP #2.

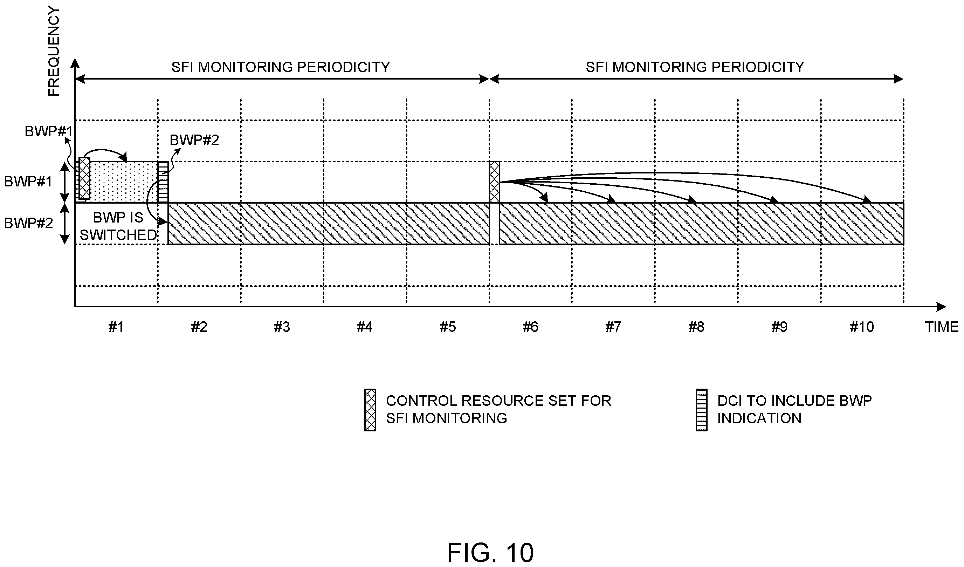

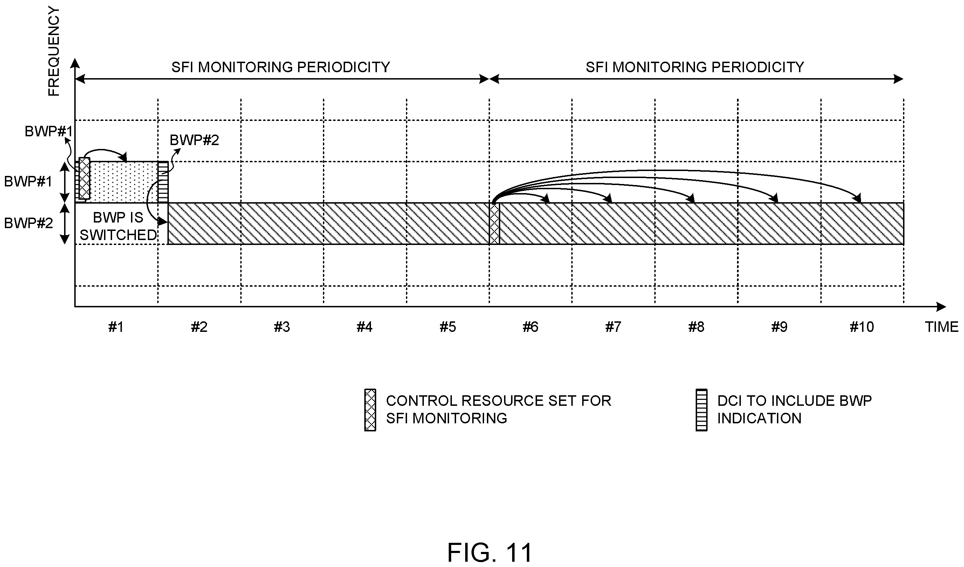

Hereinafter, an example of how to control SFI monitoring (SFI monitoring control 1 and SFI monitoring control 2) after BWP switching will be described below with reference to FIG. 10 and FIG. 11. SFI monitoring control 1 can be suitably applied to control resource set configuration 1 and control resource set configuration 2. Also, SFI monitoring control 2 can be suitably applied to control resource set configuration 2. Obviously, these are by no means limiting.

### <SFI Monitoring Control 1>

In SFI monitoring control 1, control is exerted so that a control resource set for SFI monitoring is provided in a given BWP (for example, BWP #1 in FIGs. 8).

When switching a BWP, UE monitors the given BWP where the control resource set for SFI is provided, in a slot to meet the SFI monitoring periodicity after the BWP is switched. That is, the UE acquires the SFI by monitoring the control resource set configured in the given BWP regardless of the BWP to be switched (BWP to be activated).

FIG. 10 shows an example of the method of controlling SFI monitoring after BWP switching. A case is illustrated here, in which the periodicity of SFI monitoring is five slots (for example, 5 ms), and the UE monitors the control resource sets in slots #1 and #6 to receive the PDCCH for communicating the DCI for SFI.

Also, FIG. 10 shows a case in which DCI to include BWP-indicating information to command activation of BWP #1 is transmitted in slot #1, and DCI to include BWP-indicating information to command activation of BWP #2 is transmitted in slot #2. In this case, the UE switches the BWP to activate from BWP #1 to BWP #2, based on the DCI to include BWP-indicating information, received in slot #2.

Any of the methods shown in the above first example may be used to determine the slot format in slots #2 to #5.

The UE exerts control so that, in a slot (here, slot #6) to meet the SFI monitoring periodicity after the BWP is switched, to monitor the control resource set configured in a given slot (here, BWP #1). That is, when the BWP is switched to a BWP other than BWP #1, the UE performs a fallback operation in monitoring control resource sets after the BWP is switched.

In this way, SFI monitoring after BWP switching is controlled so that a given BWP is monitored, and therefore, even when a number of BWPs are configured, a control resource set can be configured in common, it is possible to prevent an increase in overhead.

### <SFI Monitoring Control 2>

In SFI monitoring control 2, control is exerted so that the control resource set for performing SFI monitoring is configured at least in a BWP that is activated (for example, the BWP after switching).

When switching the BWP, the UE monitors the control resource set configured in an activated BWP in a slot to meet the SFI monitoring periodicity after the BWP is switched. That is, the UE monitors the control resource set configured in the BWP after the switch (activated BWP) and acquires SFI.

FIG. 11 shows an example of the method of controlling SFI monitoring after BWP switching. A case is illustrated here, in which the periodicity of SFI monitoring is five slots (for example, 5 ms), and the UE monitors the control resource sets in slots #1 and #6 to receive the PDCCH for communicating the DCI for SFI.

Also, FIG. 11 shows a case in which DCI to include BWP-indicating information to command activation of BWP #1 is transmitted in slot #1, and DCI to include BWP-indicating information to command activation of BWP #2 is transmitted in slot #2. In this case, the UE switches the BWP to activate from BWP #1 to BWP #2, based on the DCI to include BWP-indicating information, received in slot #2.

Any of the methods shown in the above first example may be used to determine the slot format in slots #2 to #5.

The UE exerts control so that, in a slot (here, slot #6) to meet the SFI monitoring periodicity after the BWP is switched, to monitor the control resource set configured in an activated BWP (here, BWP #2).

In this way, SFI monitoring after BWP switching is controlled so that the control resource set configured in an activated BWP is monitored, and therefore the operation of monitoring other deactivated BWPs (fallback operation) can be made unnecessary. By this means, there is no need to switch to other BWPs in monitoring control resource sets, so that the load of receiving operation upon the UE during the control resource set monitoring operation can be reduced. Also, even when the periodicity of SFI monitoring is configured short, it is only necessary to monitor activated BWPs (there is no need to switch to other BWPs for SFI monitoring), so that the frequency switching operation is not necessary.

### (Variation)

In the second example, too, control may be exerted so that BWP switching does not take place in the middle of the SFI monitoring periodicity. In this case, the UE may control the monitoring of control resource sets for SFI on the assumption that information to command BWP switching is not received during the SFI monitoring periodicity. As to how this operates in detail, the method shown in FIG. 7 of the first example may be applied.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

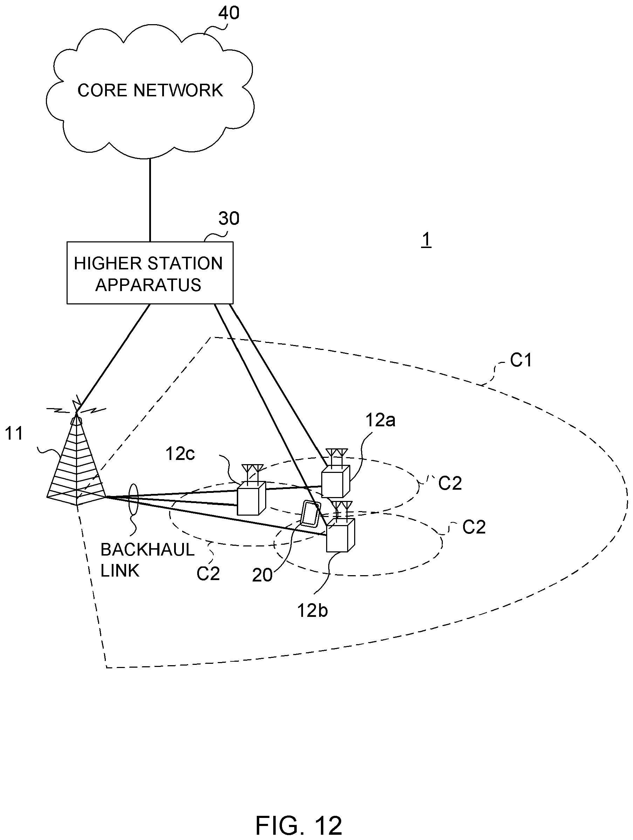

FIG. 12 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in this figure includes a radio base station 11 that forms a macro cell C1, and radio base stations 12a to 12c that are allocated within the macro cell C1 and that form small cells C2, which are narrower than the macro cell C1. Also, user terminals 20 are placed in the macro cell C1 and in each small cell C2. A structure in which different numerologies are applied between cells may be adopted here. Note that, a numerology may refer to at least one of subcarrier spacing, the length of a symbol, the length of a cyclic prefix (CP), the number of symbols per transmission time interval (TTI), and the time length of a TTI. Also, slots may be defined as units of time that depend on what numerology a user terminal uses. The number of symbols per slot may be determined by subcarrier spacing.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminal 20 can perform communication using time division duplexing (TDD) or frequency division duplexing (FDD) in each cell. A TDD cell and an FDD cell may be referred to as a "TDD carrier (frame configuration type 2)" and an "FDD carrier (frame configuration type 1)," respectively.

Also, in each cell (carrier), a slot having a relatively long time length (for example, 1 ms) (also referred to as a "TTI," a "normal TTI," a "long TTI," a "normal subframe," a "long subframe," a "subframe" and so forth) and/or a slot having a relatively short time length (also referred to as a "mini-slot," a "short TTI," a "short subframe," and so forth) may be used. Also, two or more time-length slots may be used in each cell.

Between the user terminals 20 and the radio base station 11, communication can be carried out using a carrier of a relatively low frequency band (for example, 2 GHz) and a narrow bandwidth (referred to as an "existing carrier," a "legacy carrier," etc.). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these. Furthermore, the user terminal 20 may be configured with one or more BWPs. BWP is comprised of at least part of the carrier.

The radio base station 11 and a radio base station 12 (or two radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "aggregate node," an "eNB (eNodeB)," a "transmitting/receiving point" and so on. Also, the radio base stations 12 are radio base stations each having a local coverage, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL. Also, SC-FDMA can be applied to a side link (SL) that is used in inter-terminal communication.

In the radio communication system 1, a DL data channel (also referred as a PDSCH (Physical Downlink Shared CHannel), a DL shared channel, and so on), which is used by each user terminal 20 on a shared basis, a broadcast channel (PBCH (Physical Broadcast CHannel)), L1/L2 control channels and so on are used as DL channels. DL data (at least one of user data, higher layer control information, SIBs (System Information Blocks) and so on) is communicated by the PDSCH. Also, the MIB (Master Information Block) is communicated by the PBCH.

The L1/L2 control channels include DL control channels (such as PDCCH (Physical Downlink Control CHannel), EPDCCH (Enhanced Physical Downlink Control CHannel), etc.), PCFICH (Physical Control Format Indicator CHannel), PHICH (Physical Hybrid-ARQ Indicator CHannel) and so on. Downlink control information (DCI), which includes PDSCH and/or PUSCH scheduling information and so on, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. PUSCH delivery acknowledgment information (also referred to as "A/N," "HARQ-ACK," "HARQ-ACK bit," "A/N codebook" and so on) can be communicated by using the PHICH.

UL channels that are used in the radio communication system 1 include a UL data channel that is shared by each user terminal 20 (also referred to as "PUSCH (Physical Uplink Shared CHannel)," "UL shared channel," etc.), a UL control channel (PUCCH (Physical Uplink Control CHannel)), a random access channel (PRACH (Physical Random Access CHannel)) and so on. UL data (user data and/or higher layer control information) is communicated by the PUSCH. Uplink control information (UCI), including at least one of PDSCH delivery acknowledgement information (A/N, HARQ-ACK, etc.), channel state information (CSI) and so on, is communicated by the PUSCH or the PUCCH. By means of the PRACH, random access preambles for establishing connections with cells are communicated.

### (Radio Base Station)

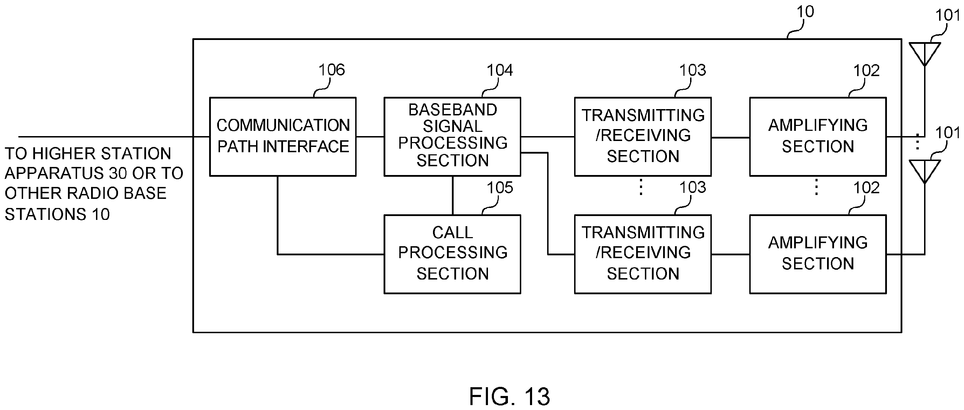

FIG. 13 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided. The radio base station 10 may be "receiving apparatus" in UL and "transmitting apparatus" in DL.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, rate matching, scrambling, an inverse fast Fourier transform (IFFT) process and a precoding process, and the result is forwarded to each transmitting/receiving section 103. Furthermore, downlink control signals are also subjected to transmission processes such as channel coding and/or an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

A transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and the result is forwarded to the higher station apparatus 30 via the communication path interface 106. The call processing section 105 at least performs call processing such as setting up and releasing communication channels, manages the state of the radio base station 10 or manages the radio resources.

The communication path interface section 106 transmits and receives signals to and from the higher station apparatus 30 via a given interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

Furthermore, the transmitting/receiving sections 103 transmit DL signals (for example, at least one of a DL control signal (also referred to as a "DL control channel," "DCI," etc.), a DL data signal (also referred to as a "DL data channel," "DL data," etc.) and a reference signal). Also, the transmitting/receiving sections 103 receive UL signals (for example, at least one of a UL control signal (also referred to as a "UL control channel," "UCI," etc.), a UL data signal (also referred to as a "UL data channel," "UL data," etc.) and a reference signal).

Also, the transmitting/receiving sections 103 transmit downlink control information (slot format-reporting DCI) that indicates a slot format. Also, the transmitting/receiving sections 103 may report information about the association between an SFI field included in the downlink control information and a number of candidate slot formats through higher layer signaling.

Also, the transmitting/receiving sections 103 may include slot format-related information in user-specific DCI (for example, DCI for use for scheduling data) and report this information to the UE.

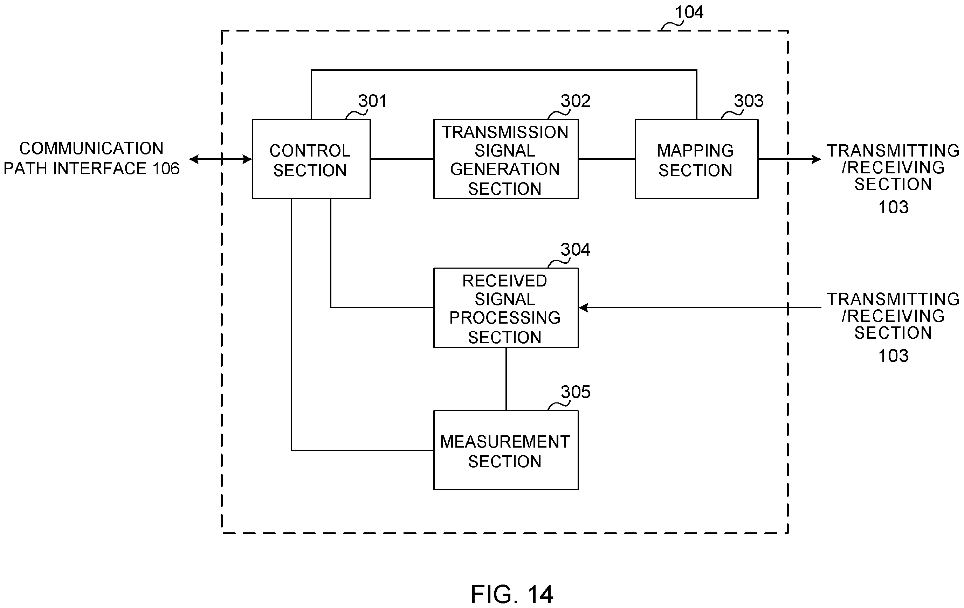

FIG. 14 is a diagram to show an exemplary functional structure of a radio base station according to the present embodiment. Note that, although this figure primarily shows functional blocks that pertain to characteristic parts of the present embodiment, the radio base station 10 has other functional blocks that are necessary for radio communication as well. As shown in this figure, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, at least one of the generation of DL signals in the transmission signal generation section 302, the mapping of DL signals in the mapping section 303, the receiving process (for example, demodulation) of UL signals in the received signal processing section 304, and the measurements in the measurement section 305. Also, the control section 301 may control the scheduling of data channels (including DL data channels and/or UL data channels).

The control section 301 may control the communication direction of each symbol in the time unit (for example, a slot) that serves as the DL data channel scheduling unit. To be more specific, the control section 301 may control the generation and/or transmission of SFI, which shows DL symbols, UL symbols or flexible symbols, in slots.

The control section 301 can be constituted by a controller, a control circuit or control apparatus that can be described based on general understanding of the technical field to which the present invention pertains.

The transmission signal generation section 302 may generate DL signals (including at least one of DL data (channel), DCI, DL reference signals, control information to be sent in higher layer signaling) as commanded from the control section 301, and output these signals to the mapping section 303.

The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302, to given radio resources, based on commands from the control section 301, and outputs these to the transmitting/receiving sections 103. For example, the mapping section 303 maps reference signals to given radio resources in allocation patterns determined by the control section 301.

The mapping section 303 can be constituted by a mapper, a mapping circuit or mapping apparatus that can be described based on general understanding of the technical field to which the present invention pertains.

The received signal processing section 304 performs receiving processes (for example, at least one of demapping, demodulation and decoding) for the UL signals transmitted from the user terminal 20. To be more specific, the received signal processing section 304 outputs the received signals and/or the signals after the receiving processes to the measurement section 305.

For the received signal processing section 304, a signal processor, a signal processing circuit or signal processing apparatus that can be described based on general understanding of the technical field to which the present invention pertains can be used. Also, the received signal processing section 304 can constitute the receiving section according to the present invention.

The measurement section 305 may measure UL channel quality based on, for example, the received power (for example, RSRP (Reference Signal Received Power)) and/or the received quality (for example, RSRQ (Reference Signal Received Quality)) of reference signals. The measurement results may be output to the control section 301.

### (User Terminal)

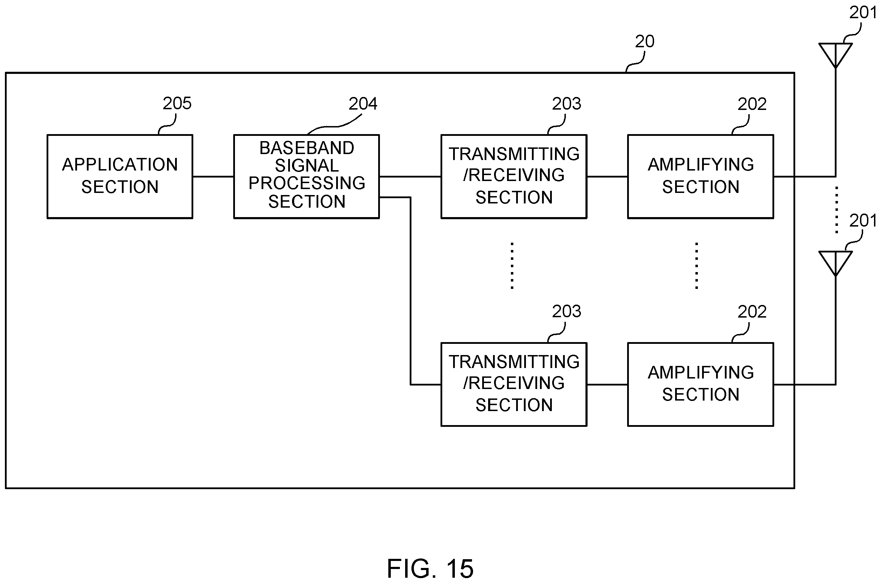

FIG. 15 is a diagram to show an exemplary overall structure of a user terminal according to the present embodiment. A user terminal 20 has a plurality of transmitting/receiving antennas 201 for MIMO transmission, amplifying sections 202, transmitting/receiving sections 203, a baseband signal processing section 204, and an application section 205. The user terminal 20 may be "transmitting apparatus" in UL and "receiving apparatus" in DL.

Radio frequency signals that are received in the multiple transmitting/receiving antennas 201 are amplified in the amplifying sections 202. The transmitting/receiving sections 203 each receive the DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, at least one of an FFT process, error correction decoding, a retransmission control receiving process and so on. The DL data is forwarded to the application section 205. The application section 205 performs processes related to higher layers above the physical layer and the MAC layer, and so on.

Meanwhile, UL data is input from the application section 205 to the baseband signal processing section 204. The baseband signal processing section 204 performs at least one of a retransmission control process (for example, an HARQ transmission process), channel coding, rate matching, puncturing, a discrete Fourier transform (DFT) process, an IFFT process and so on, and the result is forwarded to each transmitting/receiving section 203. UCI (which may be, for example, at least one of an A/N in response to a DL signal, channel state information (CSI), a scheduling request (SR) and the like) is also subjected to at least one of channel coding, rate matching, puncturing, a DFT process, an IFFT process and so on, and the result is forwarded to the transmitting/receiving sections 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 receive DL signals (for example, at least one of a DL control signal (also referred to as a "DL control channel," "DCI," etc.), a DL data signal (also referred to as a "DL data channel," "DL data," etc.) and a reference signal). Also, the transmitting/receiving sections 203 transmit UL signals (for example, at least one of a UL control signal (also referred to as a "UL control channel," "UCI," etc.), a UL data signal (also referred to as a "UL data channel," "UL data," etc.) and a reference signal).

Also, the transmitting/receiving sections 203 receive downlink control information that indicates a slot format (slot format-reporting DCI). Also, the transmitting/receiving sections 203 may receive information about the association between an SFI field included in the downlink control information and a number of candidate slot formats through higher layer signaling.

Also, the transmitting/receiving sections 203 may receive user-specific DCI (for example, the DCI for use for scheduling data), which includes slot format-related information, UL-DL configuration-related information, which is reported in higher layer signaling, and so forth.

A transmitting/receiving section 203 can be constituted by a transmitter/receiver, a transmitting/receiving circuit or transmitting/receiving apparatus that can be described based on general understanding of the technical field to which the present invention pertains. Furthermore, a transmitting/receiving section 203 may be structured as one transmitting/receiving section, or may be formed with a transmitting section and a receiving section.

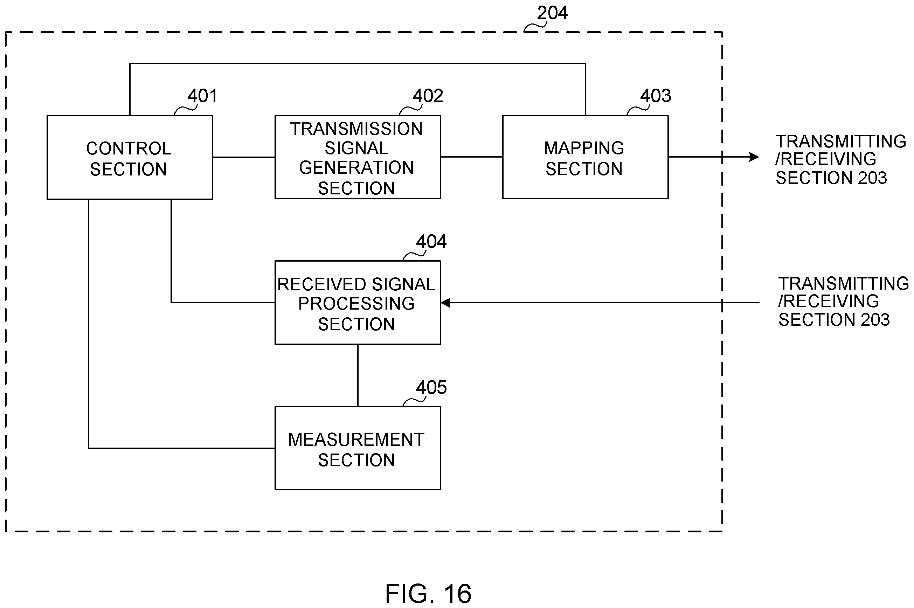

FIG. 16 is a diagram to show an exemplary functional structure of a user terminal according to the present embodiment. Note that, although this figure primarily shows functional blocks that pertain to characteristic parts of the present embodiment, the user terminal 20 has other functional blocks that are necessary for radio communication as well. As shown in this figure, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, at least one of generation of UL signals in the transmission signal generation section 402, mapping of UL signals in the mapping section 403, the receiving process of DL signals in the received signal processing section 404 and measurements in the measurement section 405.

To be more specific, the control section 401 may monitor (blind-decode) a DL control channel and control the detection of DCI (including group-common DCI and/or UE-specific DCI) for the user terminal 20. For example, the control section 401 may monitor one or more control resource sets configured for the user terminal 20.

The control section 401 may control the communication direction of each symbol in the time unit (for example, a slot) that serves as the data channel scheduling unit.

Also, when the control section 401 controls the transmitting and/or receiving processes by switching between a number of frequency bands that are configured partially in the frequency direction in a carrier, the control section 401 determines the slot format to apply to a given period in the frequency band after switching, based on given information transmitted from the base station.

Furthermore, the control section 401 may control the determination of the slot format based on downlink control information that indicates the slot format, received before the switching of the frequency band, and the numerologies applied to the frequency bands before and after the switch.

Alternatively, the control section 401 may control the determination of the slot format based at least on one of downlink control information specific to the user terminal received after switching the frequency band and the information reported in advance through higher layer signaling.

Also, the control section 401 may assume that no information to command to switch the frequency band is transmitted in the slot in the middle of the periodicity where the downlink control information that indicates a slot format is monitored.

Furthermore, if the frequency band is switched, the control section 401 may control the receipt of downlink control information that indicates a slot format by monitoring the control resource set configured in a specific frequency band or the control resource set configured in the activated frequency band.

For the control section 401, a controller, a control circuit or control apparatus that can be described based on general understanding of the technical field to which the present invention pertains can be used.

The transmission signal generation section 402 generates retransmission control information for UL signals and DL signals as commanded from the control section 401 (including performing encoding, rate matching, puncturing, modulation and/or other processes), and outputs this to the mapping section 403. The transmission signal generation section 402 can be constituted by a signal generator, a signal generating circuit or signal generating apparatus that can be described based on general understanding of the technical field to which the present invention pertains.

The mapping section 403 maps the retransmission control information for UL signals and DL signals generated in the transmission signal generation section 402 to radio resources, as commanded from the control section 401, and outputs these to the transmitting/receiving sections 203. For example, the mapping section 403 maps reference signals to given radio resources in allocation patterns determined by the control section 401.

The mapping section 403 can be constituted by a mapper, a mapping circuit or mapping apparatus that can be described based on general understanding of the technical field to which the present invention pertains.

The received signal processing section 404 performs receiving processes of DL signals (including, for example, at least one of demapping, demodulation and decoding). For example, the received signal processing section 404 may demodulate a DL data channel by using a reference signal provided in an allocation pattern determined by the control section 401.

Also, the received signal processing section 404 may output the received signals and/or the signal after the receiving process to the control section 401 and/or the measurement section 405. The received signal processing section 404 outputs, for example, higher layer control information to be sent in higher layer signaling, L1/L2 control information (for example, UL grant and/or DL assignment) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiment show blocks in functional units. These functional blocks (components) may be implemented in arbitrary combinations of hardware and/or software. Also, means for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (by using cables and/or radio, for example) and using these multiple pieces of apparatus.

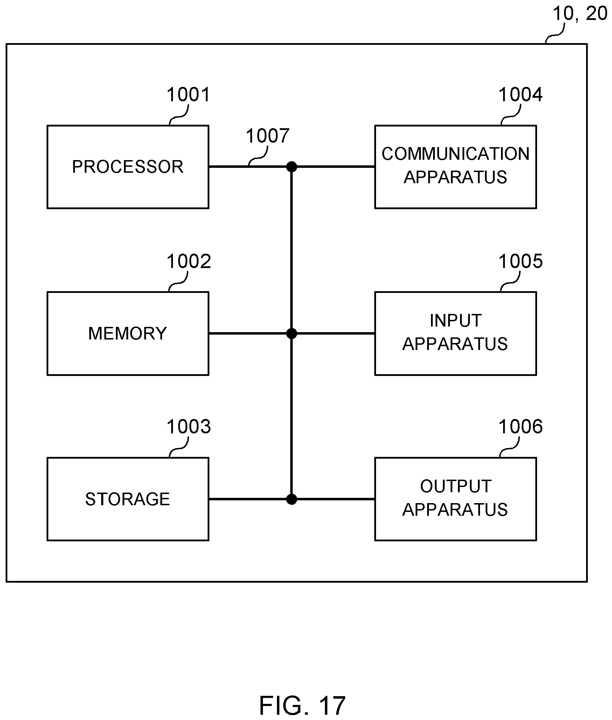

For example, the radio base station, the user terminal and so on according to the present embodiment may function as a computer that executes the processes of the radio communication method of the present invention. FIG. 17 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be interpreted as "circuit," "device," "unit" and so on. Note that, the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously or in sequence, or by using different techniques, on one or more processors. Note that the processor 1001 may be implemented with one or more chips.

Each function of the radio base station 10 and the user terminal 20 is implemented by, for example, loading given software (programs) on hardware such as the processor 1001 and the memory 1002, and allowing the processor 1001 to do calculations, and control at least one of the communication by the communication apparatus 1004, the reading and writing of data in the memory 1002 and the storage 1003 and so on.

The processor 1001 may control the whole computer by, for example, running an operating system. The processor 1001 may be constituted by a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using cable and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplexing (FDD) and/or time division duplexing (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an LED (Light Emitting Diode) lamp and so on). Note that the input apparatus 1005 and the output apparatus 1006 may be provided in an integrated structure (for example, a touch panel).

Also, each device shown in this figure is connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a "signal" may be a "message." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. One or more periods (frames) that constitute a radio frame may be each referred to as a "subframe." Furthermore, a subframe may be comprised of one or more slots in the time domain. A subframe may be a fixed time duration (for example, 1 ms), which does not depend on numerology.

A slot may be comprised of one or more symbols in the time domain (OFDM (Orthogonal Frequency Division Multiplexing) symbols, SC-FDMA (Single Carrier Frequency Division Multiple Access) symbols and so on). Also, a slot may be a time unit based on numerology. Also, a slot may include a plurality of mini-slots. Each mini-slot may be comprised of one or more symbols in the time domain.

A radio frame, a subframe, a slot, a mini-slot, and a symbol all refer to a unit of time in signal communication. A radio frame, a subframe, a slot, a mini-slot, and a symbol may be each called by other applicable names. For example, one subframe may be referred to as a "transmission time interval (TTI)," or a plurality of contiguous subframes may be referred to as a "TTI," or one slot or one mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms.

Here, a TTI refers to the minimum time unit for scheduling in radio communication, for example. For example, in LTE systems, a radio base station schedules the radio resources (such as the frequency bandwidth and/or transmission power each user terminal can use) to allocate to each user terminal in TTI units. Note that the definition of TTIs is not limited to this. The TTI may be the transmission time unit of channel-encoded data packets (transport blocks), or may be the unit of processing in scheduling, link adaptation and so on. Note that, when one slot or one mini-slot is referred to as a "TTI," one or more TTIs (that is, one or more slots or one or more mini-slots) may be the minimum time unit of scheduling. Also, the number of slots (the number of mini-slots) to constitute this minimum time unit for scheduling may be controlled.

A TTI having a time length of 1 ms may be referred to as a "general TTI (TTI in LTE Rel. 8 to 12)," a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," and so on.

A resource block (RB) is the unit of resource allocation in the time domain and the frequency domain, and may include one or more contiguous subcarriers in the frequency domain. Also, an RB may include one or more symbols in the time domain, and may be one slot, one mini-slot, one subframe or one TTI in length. One TTI and one subframe may be each comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, mini-slots, symbols and so on described above are simply examples. For example, configurations pertaining to the number of subframes included in a radio frame, the number of slots per subframe or radio frame, the number of mini-slots included in a slot, the number of symbols included in a slot or a mini-slot, the number of subcarriers included in an RB, the number of symbols in a TTI, the duration of symbols, the length of cyclic prefixes (CPs) and so on can be variously changed.

Also, the information and parameters described in this specification may be represented in absolute values or in relative values with respect to given values, or may be represented using other applicable information. For example, radio resources may be specified by given indices. In addition, equations and/or the like to use these parameters may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers, and/or from lower layers to higher layers. Information, signals and so on may be input and/or output via a plurality of network nodes.

The information, signals and so on that are input and/or output may be stored in a specific location (for example, in a memory), or may be managed using a control table. The information, signals and so on to be input and/or output can be overwritten, updated, or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling, etc.), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an "RRC connection setup message," "RRC connection reconfiguration message," and so on. Also, MAC signaling may be reported using, for example, MAC control elements (MAC CEs (Control Elements)).

Also, given information (for example, an indication to the effect "X holds") does not necessarily have to be indicated explicitly, and may be indicated in an implicit way (for example, by not reporting this given piece of information, by reporting another piece of information and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

Furthermore, the radio base stations in this specification may be interpreted as "user terminals." For example, the examples/embodiments of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, "uplink" and/or "downlink" may be interpreted as "sides." For example, an "uplink channel" may be interpreted as a "side channel."

Likewise, the user terminals in this specification may be interpreted as "radio base stations." In this case, the radio base stations 10 may have the functions of the user terminals 20 described above.

Certain actions which have been described in this specification to be performed by base stations may, in some cases, be performed by their upper nodes. In a network formed with one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended not to be an exclusive disjunction.

Now, although the present invention has been described in detail above, it should be obvious to a person skilled in the art that the present invention is by no means limited to the embodiments described herein. The present invention can be implemented with various corrections and modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a receiving section that monitors and receives downlink control information that indicates a slot format, with a given periodicity; and
a control section that, when transmitting and/or receiving processes are controlled by switching between a plurality of frequency bands that are configured partially in a frequency direction in a carrier, determines a slot format to apply to a given period in a frequency band after the switch, based on given information that is transmitted from a base station.

2. The user terminal according to claim 1, wherein the control section controls the determination of the slot format based on downlink control information that indicates a slot format and that is received before the switch of the frequency band, and numerologies that are applied to frequency bands before and after the switch.

3. The user terminal according to claim 1, wherein the control section controls the determination of the slot format based at least on one of user terminal-specific downlink control information that is received after the switch of the frequency band, and information that is reported in advance through higher layer signaling.

4. The user terminal according to claim 1, wherein the control section assumes that no information to command to switch a frequency band is transmitted in a slot in the middle of a periodicity where the downlink control information that indicates the slot format is monitored.

5. The user terminal according to one of claim 1 to claim 4, wherein, when the frequency band is switched, the control section controls receipt of the downlink control information that indicates the slot format by monitoring a control resource set configured in a specific frequency band or a control resource set configured in an activated frequency band.

6. A radio communication method for a user terminal, comprising the steps of:
monitoring and receiving downlink control information that indicates a slot format, with a given periodicity; and
when transmitting and/or receiving processes are controlled by switching between a plurality of frequency bands that are configured partially in a frequency direction in a carrier, determining a slot format to apply to a given period in a frequency band after the switch, based on given information that is transmitted from a base station.
